Europäisches Patentamt

European Patent Office

Office européen des brevets

(11) Publication number: **0 632 570 A2**

## EUROPEAN PATENT APPLICATION

(21) Application number: **94109627.3**

(22) Date of filing: **22.06.94**

(51) Int. Cl.⁶: **H02M 3/156**

(30) Priority: **28.06.93 ES 9301453**

(43) Date of publication of application:
**04.01.95 Bulletin 95/01**

(84) Designated Contracting States:
**BE DE FR GB IT SE**

(71) Applicant: **ALCATEL STANDARD ELECTRICA, S.A.**
**Ramirez de Prado, 5/6**
**E-28045 Madrid (ES)**

(72) Inventor: **Ruiz Merino, Francisco Javier**
**Doctor Garcia Tapia 68, 3.A**
**E-28030 Madrid (ES)**

(74) Representative: **Pohl, Herbert, Dipl.-Ing et al**
**Alcatel SEL AG**
**Patent- und Lizenzwesen**
**Postfach 30 09 29**
**D-70449 Stuttgart (DE)**

(54) Switch mode power supply with shortcircuit current limitation.

(57) Switched power supply in which current mode control is performed and which includes an error amplifier (1) and an oscillator (2).

This power supply also incorporates a differential amplifier (3) connected to the oscillator (2) to change the frequency of oscillation in the event of a shortcircuit at the output. The differential amplifier (3) receives the output signal (Vo) from the error amplifier (1).

This output signal (Vo) from the error amplifier (1) is proportional to the output current delivered by the power supply such that when it exceeds a determined value, the frequency of the oscillator (2) is reduced in order to limit the shortcircuit current to a lower value.

FIG. 1

## OBJECT OF THE INVENTION

This invention concerns switched power supplies in which current mode control is performed and which include a current limiting device in the event of a shortcircuit occurring, that is based on an additional feature whereby the operating frequency of such supplies is reduced when a shortcircuit is detected across their output terminals.

It is particularly applicable to power supplies which have electrical isolation between the output stage and the previous stages.

## BACKGROUND TO THE INVENTION

The technique of reducing the working frequency of switched power supplies when a shortcircuit occurs at their outputs was known prior to the invention described in this document. This can be seen, for example, in the Unitrode application notes "Linear integrated circuits data and applications handbook", published in April 1990, page 9-302.

As is already known, the signal that drives the power stage in switched power supplies with current mode control, normally consisting of a MOSFET, is a square wave signal whose duty cycle determines the output voltage or current of the unit. In the event of a shortcircuit at the output, the width of the pulse in the square wave signal is reduced to the minimum, whereby the output current is limited to a set value. Nevertheless, the value of this limit is usually insufficient and, in addition, is difficult to control because it depends on many factors such as tolerances of the components used, delays in integrated circuit comparators, etc.

Various forms exist of limiting the value of this shortcircuit current to a greater extent. One of the best known is to reduce the working frequency, as already mentioned, while maintaining the square wave signal pulse width at the minimum value; in this way the mean value of the shortcircuit current is also reduced.

In the reference note already mentioned, in the figure on the left, it is possible to see part of the integrated circuit UC3842A and the associated external components that constitute the oscillator (pins 4 and 8 of the integrated circuit, resistor $R_T$ and capacitor $C_T$). With the values indicated of $R_T$ = 15 kΩ and $C_T$ = 1 nF, the working frequency is 105 kHz, as is indicated in the table.

There is a further circuit consisting of a diode, the resistor $R_F$, the transistor Q1 and the resistive divider connected to the output of the power supply, that is used to feed the base of the transistor Q1 and pin 2 of the integrated circuit UC3842A, and which in turn forms the inverting input to the error amplifier used in the control circuit of the power supply. This additional circuit serves to change the frequency of oscillation of the oscillator since, in the event of a shortcircuit at the output of the unit, the transistor Q1 saturates, whereby the external components associated with the oscillator are altered.

In the figure on the right of the referenced note, the signal present on pin 4 of the integrated circuit can be seen; its frequency is 105 kHz in normal operation and 36 kHz in the event of a shortcircuit.

Nevertheless, when the circuit includes isolation between the primary and secondary of the output transformer, as is the usual case, an additional isolating stage would be required between the components mentioned, possibly prior to the transistor Q1. In this case the frequency of oscillation would vary as the output voltage falls from a determined value, whereby in normal operation (without a shortcircuit at the output) it could arise that the frequency of oscillation also varies and produces major problems of stability.

## TECHNICAL PROBLEM TO BE OVERCOME

As a result of the foregoing, the technical problem to be overcome consists in retaining the isolation between primary and secondary of the output transformer in a shortcircuit current limiting circuit employing working frequency reduction, as well as in avoiding possible problems in stability produced by frequency modulation generated in the aforementioned shortcircuit current limiting circuit.

## CHARACTERISATION OF THE INVENTION

To overcome the problems mentioned above, the invention is characterised in that, in addition to the error amplifier and the oscillator circuit already included in a switched power supply with current mode control, includes means for altering the frequency of oscillation of the oscillator circuit which are fed with an output signal from the error amplifier.

It is also characterised in that the means for altering the frequency of oscillation of the oscillator include a differential amplifier whose output is connected to the oscillator mentioned and which generates a current with a value that depends on the difference between the output voltage of the error amplifier and a first reference voltage.

It is also characterised in that the differential amplifier consists of:

- a first and a second resistance that form a resistive divider that is connected between the error amplifier output and a second reference signal,

- a third and a fourth resistance forming another resistive divider connected between the first reference voltage and the second reference voltage,
- a first transistor whose collector is connected to the passive network that determines the frequency of oscillation of the oscillator, its base to the common node that joins the first and second resistances, and its emitter to a first node,
- a second transistor whose collector is connected to the first reference voltage, its base to the common node that joins the third and fourth resistances, and its emitter to the first node, and
- a fifth resistance connected between the first node and the second reference voltage.

As a consequence of the invention, the power supply with shortcircuit current limitation retains the same isolation between the primary and secondary of the output transformer that it would have if the limiting was not present, without requiring any additional isolating stage.

In addition, the possibility of defining the reference value after which the frequency of oscillation is abruptly reduced avoids potential problems with stability.

## BRIEF FOOTNOTES TO THE FIGURES

A more detailed explanation of the invention can be found in the following description of the invention based on the figures attached in which:
- figure 1 shows a block diagram of the parts of a switched power supply involved in the invention, and
- figure 2 shows a preferred implementation of the differential amplifier according to the invention, included in figure 1.

## DESCRIPTION OF THE INVENTION

A switched power supply with current node control, as in the case in question, includes in the control part an error amplifier 1 whose output voltage Vo is proportional to the output current of this power supply. An output current is also defined that is considered to be maximum in normal operation and that corresponds to an output voltage Vo of the error amplifier 1 and which is the maximum voltage in normal working conditions.

Another current is also defined, greater than the preceding one, above which it is considered that a shortcircuit exists and which corresponds to an output voltage from the error amplifier 1 of maximum value.

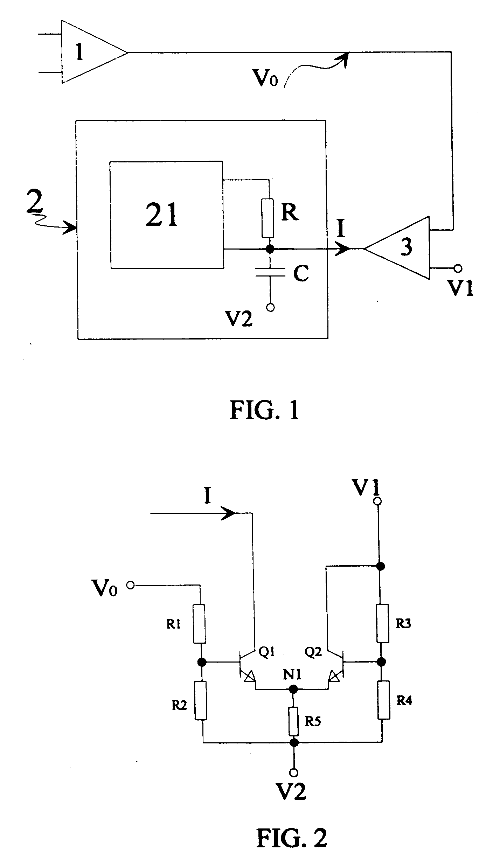

As a result of this dependence of the output voltage Vo of the error amplifier 1 on the output current of the power supply, this output voltage Vo is applied to one of the inputs of the differential amplifier 3, as can be seen from figure 1, the other input of which is fed with a first reference voltage V1, such that it produces at its output a current I the value of which is zero when the voltage on the base of the first transistor Q1, which is proportional to the output voltage Vo of the error amplifier 1, is less than the voltage on the base of the second transistor Q2 which, in turn, is proportional to the first reference voltage V1, and which takes a determined value when the voltage on the base of the first transistor Q1 is greater than the voltage on the base of the second transistor Q2.

This current I from the differential amplifier 3 alters the oscillator circuit 2 in such a way that its frequency diminishes with the object of reducing the duty cycle of the square wave signal that determines the output current from the switched power supply.

The oscillator 2 is an astable circuit consisting of a passive RC network and an associated active circuit 21 whereby the capacitor C is periodically charged through the resistor R and directly and rapidly discharged when the voltage across this capacitor attains a certain value. If, in addition there is a small current I that tends to discharge the capacitor C mentioned, the charging time will be increased, but the discharging time will remain almost unaffected. The operating frequency will fall more and more as the value of the current I becomes greater, however this current I must not exceed a critical value above which the oscillator 2 will cease to oscillate.

The circuit shown in figure 2 shows a preferred implementation of the differential amplifier 3, which consists of two emitter-coupled transistors Q1 and Q2 forming a differential pair. The output voltage Vo of the error amplifier 1, with respect to a second reference voltage V2, is applied to a resistive divider consisting of a first and a second resistance R1 and R2, from the common point of which the signal that is applied to the base of the first transistor Q1, is obtained. Similarly the first reference voltage V1 is applied to another resistive divider consisting of a third and a fourth resistance R3 and R4 with respect to the second reference voltage V2 and from the common point of which the signal that is applied to the base of the second transistor Q2, is obtained.

The emitters of the two transistors Q1 and Q2 are also joined to one of the extremities of a fifth resistor R5 in a first node N1, the other extremity being connected to the second reference voltage V2. Moreover, the collector of the second transistor Q2 is connected to the first reference voltage V1, while the collector of the first transistor Q1 is connected to the oscillator 2 such that its frequency of oscillation can be altered in accordance with the collector current of this first transistor Q1.

In the normal operating mode (when there is no shortcircuit at the output), the voltage on the base of the second transistor Q2 is greater than that of the first transistor Q1 and the current flowing through the fifth resistor R5 comes only from the emitter current of the second transistor Q2, and consequently from the first reference voltage V1.

Nevertheless when the voltage on the base of the first transistor Q1 is greater than that on the base of the second transistor Q2, which occurs when the output current conditions of the unit exceed the maximum defined value, then the second transistor Q2 is cut off and all the current flowing through the fifth resistance R5 comes only from the emitter of the first transistor Q1, this value being practically equal to that at its collector, which is that taken from the oscillator circuit 2.

Under these conditions, the current I generated by the differential amplifier 3 takes a value that is approximately proportional to the output voltage Vo of the error amplifier 1 such that the frequency of oscillation of the oscillator 2 is given approximately by the expression:

$$Fosc \simeq \frac{K \cdot (V1 - (I \cdot R))}{R \cdot C}$$

where K is a constant of proportionality that depends on the circuit.

**Claims**

1. SWITCHED POWER SUPPLY WITH SHORTCIRCUIT CURRENT LIMITATION in which current mode control is performed and which includes an error amplifier (1) and an oscillator (2), **characterised** in that it also includes means for altering the frequency of the oscillator (2) which are fed with an output signal from the error amplifier (1).

2. POWER SUPPLY according to claim 1, **characterised** in that the means for altering the frequency of the oscillator (2) comprises a differential amplifier (3) which receives as inputs the output signal (Vo) of the error amplifier (1) and a first reference voltage (V1) and whose output, which is connected to the oscillator (2), generates a current (I) whose value depends on the difference between the output voltage (Vo) of the error amplififer (1) and the first reference voltage (V1).

3. POWER SUPPLY according to claim 2, **characterised** in that the differential amplifier (3) consists of:

- a first and a second resistance (R1,R2) that form a resistive divider connected between the output (Vo) of the error amplifier (1) and a second reference voltage (V2);
- a third and a fourth resistance (R3,R4) that form another resistive divider connected between the first reference voltage (V1) and the second reference voltage (V2);
- a first transistor (Q1) whose collector is connected to the passive network that determines the frequency of oscillation of the oscillator (2), its base to the common node that joins the first and the second resistances (R1,R2) and its emitter to a first node (N1);
- a second transistor (Q2) whose collector is connected to the first reference voltage (V1), its base to the common node that joins the third and the fourth resistances (R3,R4) and its emitter to the first node (N1); and
- a fifth resistance (R5) connected between the first node (N1) and the second reference voltage (V2).

**FIG. 1**

**FIG. 2**